# EUROPEAN PATENT APPLICATION

(11) **EP 3 764 302 A1**
(43) Date of publication of application: **13.01.2021**
(21) Application number: 18909239.8
(22) Date of filing: 16.03.2018
(51) Int. Cl.: G06Q 20/06, H02J 3/00

(54) **BLOCKCHAIN- AND CLOUD POWER-BASED MICROGRID ECOSYSTEM**

(30) Priority: 07.03.2018 CN 201810188083
(71) Applicant: SICHUAN HUASEN XINKE INFORMATION CO., LTD., Chengdu, Sichuan 610041 (CN)
(72) Inventor: LIN, Huasen, Chengdu, Sichuan 610041 (CN)
(74) Representative: Cabinet Chaillot
(86) International application number: PCT/CN2018/079306
(87) International publication number: WO 2019/169659

(57) **Abstract**

A blockchain and cloud power supply-based microgrid ecosystem, comprising electricity generating equipment, an energy storage power supply, an ecological management module, and a blockchain trading system. An EBIOGEM is used for implementing power level detection for the energy storage power supply. An electricity dispatch module is used for electricity dispatch on the basis of electricity transaction information in a transaction database. The electricity dispatch module is connected to electricity-consuming terminals via power transmission lines. The switching speed of an inductive component of the system can achieve synchronization with IGBT and a digital circuit, thus increasing the conversion efficiency of a battery and a power supply, and at the same time reducing the power consumption of the battery and the power supply; the internal resistance of the EBIOGEM matches the internal resistance of chain nodes, with circulation continued by program hardware and a communication network, equal distribution of energy is acquired, the applied physical distance is reduced to the greatest extent, energy harvesting and particle size calculation are provided, individuals and communities are authorized on the basis of chainblock cipher machines to jointly create new energy sources, and the microgrid ecosystem implements detection, early warning, control, big data collection, energy metering, and micropower management.

## Description

### Technical Field

The invention relates to a blockchain- and cloud power supply-based microgrid ecosystem.

### Background Art

Blockchain is an important concept of Bitcoin, which is essentially a decentralized database and also serves as the underlying technology of Bitcoin. In a narrow sense, blockchain is a chained data structure that combines data blocks in sequence in chronological order, and is a distributed ledger guaranteed by cryptography that cannot be tampered with or forged. In a broad sense, blockchain technology is a new new distributed infrastructure and computing paradigm that uses blockchain data structures to verify and store data, uses distributed node consensus algorithms to generate and update data, uses cryptography to ensure the security of data transmission and access, and uses smart contracts composed of automated script codes to program and manipulate data.

The blockchain technology, also known as distributed ledger technology, is an Internet database technology, which is characterized by decentralization, openness and transparency, allowing everyone to participate in database records. Colloquially, If we assume that the database is a ledger, reading and writing the database can be regarded as an act of bookkeeping, the principle of blockchain technology is to find the fastest and best person in a period of time who will perform the bookkeeping, and then sends this page of the ledger to everyone else in the entire system. This is equivalent to changing all the records in the database and sending the same to every other node in the entire network, thereby the blockchain technology is also called a distributed ledger.

Blockchain technology was originally the basic technology of Bitcoin, and is currently being researched all over the world, and can be widely used in various fields such as finance. The blockchain technology with the concept of decentralization and a core of distributed shared accounting technology is expected to disrupt multiple industries in the entire society in the future. As a distributed and shared accounting technology, blockchain technology in a larger sense enables all parties involved to establish a self-provable trust relationship at the technical level, thereby achieving the purpose of decentralization. At present, the technology has a lot of imagination in many fields such as finance, Internet of things, supply chain, industrial automation and so on. In the prior art, the traditional smart grid operation mode is to uniformly transmit the collected power to the central power station, and then the power station will uniformly transmit the same to end users on demand. The traditional method has many drawbacks, the first is line loss, due to distance issues, about 8-9% of the power is lost during line transmission. The second is reliability, once the central power station is interrupted for some reason, the power transmission in the entire area will be greatly affected.

### Summary of the Invention

### Technical problem

A power trading system based on blockchain technology can solve the problems mentioned above, however, in order to realize the electronic quantities detection in the power transaction, the traditional power inductive component adopts coil structure, the gap-distributed capacitance is large, there is serious copper loss, magnetic loss, large internal resistance, and low conversion efficiency, moreover, the switching speed thereof is most up to 200K while the switching speed of the IGBT and digital circuit is generally about 500K, the switching speed of the traditional power inductive component cannot be synchronized with the switching speed of IGBT and the digital circuit, thereby the power consumption of the system is high.

The invention aims to overcome the deficiency in the prior art by providing a blockchain- and cloud power supply-based microgrid ecosystem, which adopts power inductive components with low power consumption to detect and control the battery, thereby solving the discrete problem of battery and circuit and reducing the system loss.

### Means for Solving Problem

### Technical Schemes

The purpose of the invention is realized by adopting following technical schemes: a blockchain- and cloud power supply-based microgrid ecosystem, comprising electricity generating equipment belonging to each user, an energy storage power supply based on graphene battery and used for storing electricity generated by the electricity generating equipment, an ecological management module used for realizing electronic quantities detection and power transmission, and a blockchain trading system;
the ecological management module comprises an electronic gene chip EBIOGEM and a power transmission unit, the electronic gene chip EBIOGEM is used for implementing power level detection for the energy storage power supply, the electronic gene chip EBIOGEM comprises IGBT inspection module, inductive component and digital circuit, the switching speed of the inductive component can achieve synchronization with IGBT inspection module and the digital circuit, the internal resistance of the electronic gene chip EBIOGEM matches the internal resistance of the energy storage power supply;
the power transmission unit is used to realize the power transmission between the energy storage power supply and the blockchain trading system;
the blockchain trading system comprises blockchain transaction platform, transaction database and electricity dispatch module, the blockchain transaction platform is used to record the electricity data detected by the electronic gene chip EBIOGEM and the electricity transaction information submitted by the user client into the transaction database; the electricity dispatch module is used for electricity dispatch on the basis of electricity transaction information in the transaction database, the electricity dispatch module realizes power transmission through the power transmission unit and the energy storage power supply, and the electricity dispatch module is connected to electricity-consuming terminals via power transmission lines.

The electronic gene chip EBIOGEM also comprises a Ku ultra-high-frequency interference detection module, the Ku ultra-high-frequency interference detection module is used to achieve obstacle interference detection through microwave frequency detection, the detection result data of the Ku ultra-high-frequency interference detection module is uploaded to the blockchain transaction platform through data transmission unit.

The inductive component comprises electrical inductance and transformer.

The electricity generating equipment comprises one or more combinations of a wind power generation equipment, a photovoltaic power generation equipment, and a mechanical energy power generation equipment.

The electricity-consuming terminals comprise street lamps and vehicles.

A blockchain- and cloud power supply-based microgrid ecosystem also comprises a user client, the user client establishes communication with the blockchain transaction platform through communication network.

A blockchain- and cloud power supply-based microgrid ecosystem also comprises an administration client, the administration client establishes communication with the blockchain transaction platform through communication network.

A blockchain- and cloud power supply-based microgrid ecosystem also comprises a distributed power supply, charging interface of the distributed power supply is connected to the energy storage power supply.

### Advantageous Effects of the Invention

### Advantageous Effects

The advantageous effects of the invention are:
1) the invention provides a blockchain- and cloud power supply-based microgrid ecosystem, which has power transaction functions, electricity generating equipment is arranged in users' home and each user can act as an independent power prosumer, on the one hand, each power prosumer is connected with electricity users to priorly consume internal energy storage based on the principle of nearby consumption; on the other hand, based on the blockchain, each user family can be the master of its own energy, freely trade and transfer can be achieved, thereby making profits through own energy becomes possible.
2) the microgrid is a highly autonomous and flexible energy network that can work in parallel with the national grid, or work in an island mode, and can integrate distributed energy produced in the local area, with extremely high energy efficiency and power supply reliability.
3) the invention improves the switching speed of power inductive components and speeds up the response time of inductive components, the switching speed of inductive component of the system can achieve synchronization with IGBT and digital circuit, thereby increasing the conversion efficiency of a battery and a power supply, and power inductive components with low power consumption is used to detect and control the energy storage power supply, thereby reducing the system loss. The internal resistance of the EBIOGEM matches the internal resistance of chain nodes, with circulation continued by program hardware and a communication network, equal distribution of energy is acquired, the applied physical distance is reduced to the greatest extent, energy harvesting and particle size calculation are provided, individuals and communities are authorized on the basis of blockchain cipher machines to jointly create new energy sources, and the microgrid ecosystem implements detection, early warning, control, big data collection, energy metering, and micropower management.

### Brief Description of Accompanying Drawings

### Description of Accompanying Drawings

FIG. 1 is a block diagram showing the system principle in the invention;
FIG. 2 is an architecture diagram showing the system software.

### Embodiments of the Invention

### Preferred Embodiment of the Invention

The technical schemes of the invention will be further described in detail below with reference to the accompanying drawings, however, the protection scope of the invention is not limited thereto.

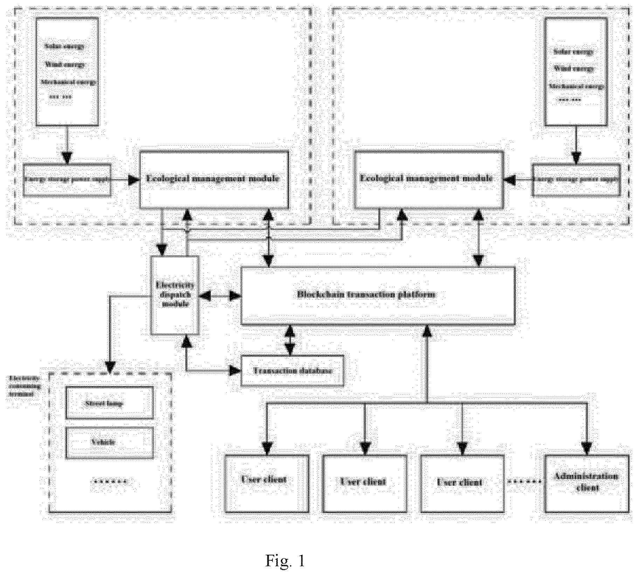

As shown in FIG. 1, a blockchain- and cloud power supply-based microgrid ecosystem, comprising electricity generating equipment belonging to each user, the user can be home users, office users, factory users, school users, hospital users, and so on. The electricity generating equipment comprises but is not limited to one or more combinations of a wind power generation equipment, a photovoltaic power generation equipment, and a mechanical energy power generation equipment. An energy storage power supply, which is based on graphene battery and used for storing electricity generated by the electricity generating equipment, the advantages of using graphene-based batteries include: 1) large power storage, the specific energy value of a lithium battery (subject to the most advanced) is 180wh/kg, while the specific energy of a graphene battery exceeds 600wh/kg. 2) fast charging, an electric car powered by graphene batteries can travel up to 1,000 kilometers, and the charging time thereof is less than 8 minutes. 3) long service time, the service life thereof is four times that of traditional hydrogenated batteries and twice that of lithium batteries. 4) low weight, the characteristics of graphene make the weight of the battery can be reduced to half of the traditional battery, which can improve the efficiency of the machine loaded with the battery. 5) low cost, the cost thereof will be 77 per cent lower than lithium batteries.

An ecological management module, used for realizing electronic quantities detection and power transmission, and a blockchain trading system.

The ecological management module comprises an electronic gene chip EBIOGEM and a power transmission unit, the electronic gene chip EBIOGEM is used for implementing power level detection for the energy storage power supply, the electronic gene chip EBIOGEM comprises IGBT inspection module, inductive component and digital circuit, the inductive component comprises electrical inductance and transformer. The switching speed of the inductive component can achieve synchronization with IGBT inspection module and the digital circuit, the internal resistance of the electronic gene chip EBIOGEM matches the internal resistance of the energy storage power supply, thereby increasing the conversion efficiency of a battery and a power supply, and reducing power consumption of a battery and a power supply. Specifically, inductive components are made of common materials similar in structure to graphene two-dimensional materials.

The power transmission unit is used to realize the power transmission between the energy storage power supply and the blockchain trading system.

The blockchain trading system comprises blockchain transaction platform, trading database and electricity dispatch module, the blockchain transaction platform is used to record the electricity data detected by the electronic gene chip EBIOGEM and the electricity transaction information submitted by the user client into the transaction database; the electricity dispatch module is used for electricity dispatch on the basis of electricity transaction information in the transaction database, the electricity dispatch module realizes power transmission with the energy storage power supply through the power transmission unit, the electricity dispatch module is connected to electricity-consuming terminals via power transmission lines, and the electricity-consuming terminals can be street lamps, vehicles, base stations and so on.

For example: a user A (as an independent power prosumer) uses electricity generating equipment thereof to generate electricity and stores the same in the energy storage power supply thereof, the electronic gene chip EBIOGEM detects that the electricity stored in the energy storage power supply is 200 degrees, and the ecological management module uploads the electricity data to the blockchain transaction platform and record into the transaction database. Another user B needs to purchase electricity, initiates a transaction request of "purchasing 50 degrees of electricity" to the blockchain transaction platform through the user client, and pays the electricity purchase fee to the platform, after receiving the transaction request, the blockchain transaction platform transmits 50 degrees of electricity from the energy storage power supply of A to the electricity dispatch module through power transmission unit, and the platform pays electricity purchase fee to A, the power dispatch module transmits the 50 degrees of electrical to B for use. User B can be a user with the function of generating electricity and selling electricity, or a simple electricity terminal owner.

Preferably, the electronic gene chip EBIOGEM also comprises a Ku ultra-high-frequency interference detection module, the Ku ultra-high-frequency interference detection module is used to achieve obstacle interference detection through microwave frequency detection, the detection result data of the Ku ultra-high-frequency interference detection module is uploaded to the blockchain transaction platform through data transmission unit. The ultra-high-frequency interference detection unit can realize the microwave frequency detection with 360° of turnover, and can effectively detect the invisible electromagnetic interference and frequency interference around the energy storage power supply.

A blockchain- and cloud power supply-based microgrid ecosystem also comprises a user client, the user client establishes communication with the blockchain transaction platform through communication network. Users can send electricity purchase requests, pay electricity purchase fees, send electricity sales requests, cash out electricity sales income, view energy storage power supply information, and view electricity transaction information through the user client. Moreover, through the integration of third-party systems, many functions such as water, electricity, gas, and telephone payment can also be realized through the user client.

A blockchain- and cloud power supply-based microgrid ecosystem also comprises an administration client, the administration client establishes communication with the blockchain transaction platform through communication network. Administrators can add, delete, modify, and check data through the administration client.

A blockchain- and cloud power supply-based microgrid ecosystem also comprises a distributed power supply, charging interface of the distributed power supply is connected to the energy storage power supply. The electricity stored in the energy storage power supply can be used to charge the distributed power supply, or charge the distributed power supply after the user purchases electricity. Distributed power supply refers to a small independent power supply with a power ranging several kilowatts to 50MW, which is used to meet the outdoor use needs of users, such as peak shaving, power supply for remote users or commercial and residential areas, and can save investment in power transmission and transformation and improve power supply reliability.

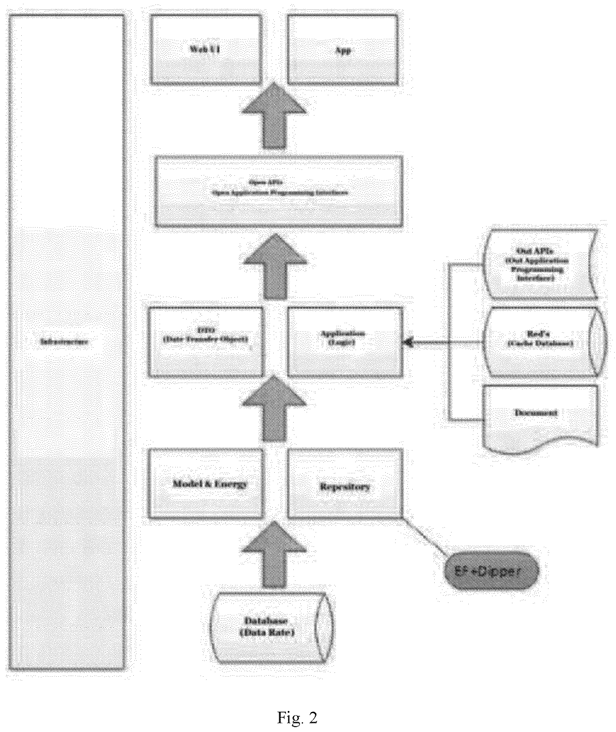

In terms of software technology, the microgrid ecosystem is very different from the common two-layer C/S structure and three-layer B/S structure, the complete technical architecture of the platform comprises: six layers of infrastructure layer, UI layer, service layer, domain layer, application layer, data warehouse layer, the technical architecture diagram is shown in FIG. 2.

The platform is based on graphene blockchain and framework of SOA (Service-oriented Architecture), adopts technology of ASP.NET MVC5 and lightweight Rest service framework WebAPI, combines AOP (Aspect-Oriented Programming) thinking, process guidance of BPM (Business Process Management), and domain-driven development.

For data storage, SQL SERVER2008R2, and NoSQL such as MongDB and Redis can be used for better integration with Windows environment.

The system is equipped with scientific and complete system of management, operation and maintenance, and the system advantages are as follows:
a) breaking away from the traditional standalone information isolated-island monitoring system, seamlessly and tightly combining with the overall information.
b) equipment is with explosion-proof and lightning protection, safe and stable;
c) good disaster tolerance mechanism: supporting data breakpoint transmission to ensure zero packet loss rate after power outage;
   real-time alarm, non polling cycle alarm, and once any alarm will be uploaded in real time instead of reporting until the data collection time;
e) the alarm is automatically connected to the emergency dispatch system for flow of tracking processes;
f) multi-terminal support: dispatch center, mobile computer, tablet, mobile phone, APP, WeChat, compatible with whole system and multi-network;
g) sophisticated powerful data analysis functions: loss analysis, comparative analysis, predictive analysis, data diagnosis;
h) SCADA (supervisory control and data acquisition) seamlessly accessing to the overall information, and all systems are truly integrated;
i) in-time after-sales service platform: terminal remote upgrade and maintenance, system online customer immediate support.

The above are only the preferred embodiments of the invention, and it should be understood that the invention is not limited to the form disclosed herein, and should not be regarded as an exclusion of other embodiments, but can be used in various other combinations, modifications and environments, and can be modified through the above teaching or technology or knowledge in related fields within the scope of the concept described herein. The modifications and changes made by those skilled in the art, without departing from the spirit and scope of the invention, should fall within the protection scope of the appended claims of the invention.

## Claims

1. A blockchain- and cloud power supply-based microgrid ecosystem, comprising electricity generating equipment belonging to each user, an energy storage power supply based on graphene battery and used for storing electricity generated by the electricity generating equipment, an ecological management module used for realizing electronic quantities detection and power transmission, and a blockchain trading system;
the ecological management module comprises an electronic gene chip EBIOGEM and a power transmission unit, the electronic gene chip EBIOGEM is used for implementing power level detection for the energy storage power supply, the electronic gene chip EBIOGEM comprises IGBT inspection module, inductive component and digital circuit, the switching speed of the inductive component can achieve synchronization with IGBT inspection module and the digital circuit, the internal resistance of the electronic gene chip EBIOGEM matches the internal resistance of the energy storage power supply; the power transmission unit is used to realize the power transmission between the energy storage power supply and the blockchain trading system;
the blockchain trading system comprises blockchain transaction platform, trading database and electricity dispatch module, the blockchain transaction platform is used to record the electricity data detected by the electronic gene chip EBIOGEM and the electricity transaction information submitted by the user client into the transaction database; the electricity dispatch module is used for electricity dispatch on the basis of electricity transaction information in the transaction database, the electricity dispatch module realizes power transmission through the power transmission unit and the energy storage power supply, and the electricity dispatch module is connected to electricity-consuming terminals via power transmission lines.

2. The blockchain- and cloud power supply-based microgrid ecosystem of claim 1, wherein the electronic gene chip EBIOGEM also comprises a Ku ultra-high-frequency interference detection module, the Ku ultra-high-frequency interference detection module is used to achieve obstacle interference detection through microwave frequency detection, the detection result data of the Ku ultra-high-frequency interference detection module is uploaded to the blockchain transaction platform through data transmission unit.

3. The blockchain- and cloud power supply-based microgrid ecosystem of claim 1, wherein the inductive component comprises electrical inductance and transformer.

4. The blockchain- and cloud power supply-based microgrid ecosystem of claim 1, wherein the electricity generating equipment comprises one or more combinations of a wind power generation equipment, a photovoltaic power generation equipment, and a mechanical energy power generation equipment.

5. The blockchain- and cloud power supply-based microgrid ecosystem of claim 1, wherein the electricity-consuming terminals comprise street lamps and vehicles.

6. The blockchain- and cloud power supply-based microgrid ecosystem of claim 1, wherein the microgrid ecosystem also comprises a user client, the user client establishes communication with the blockchain transaction platform through communication network.

7. The blockchain- and cloud power supply-based microgrid ecosystem of claim 1, wherein the microgrid ecosystem also comprises an administration client, the administration client establishes communication with the blockchain transaction platform through communication network.

8. The blockchain- and cloud power supply-based microgrid ecosystem of claim 1, wherein the microgrid ecosystem also comprises a distributed power supply, charging interface of the distributed power supply is connected to the energy storage power supply.
